# EUROPEAN PATENT SPECIFICATION

(11) **EP 3 500 451 B1**
(45) Date of publication and mention of the grant of the patent: **06.10.2021**
(21) Application number: 17758711.0
(22) Date of filing: 16.08.2017
(51) Int. Cl.: B60P 3/34

(54) **SLIDE-OUT ROOM WITH COLLAPSIBLE WALLS AND ROOF AND OPERATING MECHANISM THEREFOR**
AUSZIEHBARER RAUM MIT FALTBAREN WÄNDEN UND DACH UND BETÄTIGUNGSMECHANISMUS DAFÜR
PIÈCE COULISSANTE PRÉSENTANT DES PAROIS ET TOIT REPLIABLES ET SON MÉCANISME DE FONCTIONNEMENT

(30) Priority: 22.08.2016 US 201662378019 P
(43) Date of publication of application: 26.06.2019
(73) Proprietor: Lippert Components, Inc., Elkhart, Indiana 46514 (US)
(72) Inventor: REVELINO, Lawrence, Norco, California 92860 (US); QUIGLEY, Patrick, South Bend, Indiana 46615 (US)
(74) Representative: McWilliams, David John
(86) International application number: PCT/US2017/047135
(87) International publication number: WO 2018/038995

(56) References cited:
- EP-A1- 0 065 398
- WO-A2-2011/034349
- US-A- 5 248 180
- US-A1- 2005 184 546
- US-A1- 2006 273 606

## Description

### CROSS-REFERENCE TO RELATED APPLICATION

This application claims benefit under 35 U.S.C. § 119 of U.S. Provisional Patent Application No. 62/378,019, filed on August 22, 2016.

### BACKGROUND OF THE DISCLOSURE

A recreational vehicle (RV) may be provided with a slide-out room that may be extended through an opening in a side wall of the RV to provide additional living space inside the RV. The slide-out room may be retracted through the opening to reduce the footprint of the RV while in transit. Such a slide-out room typically is configured as a five-sided box, having a floor, a ceiling, first and second side walls, and an end wall. The sixth side of the box is open to provide access to the room from the interior of the RV. Such slide-out rooms are known for example from US 5 248 180 A or from US 2006/273606 A1.

Each of the floor, the ceiling, the first and second side walls, and the end wall of a typical slide-out room is rigid and fixed with respect to all of the others of the floor, the ceiling, the first and second side walls, and the end wall. As such, each of the floor, the ceiling, the first and second side walls, and the end wall of a typical slide-out room contributes to the structural integrity of the room as a whole. Removal of any of the floor, the ceiling, the first and second side walls, and the end wall of the slide-out room, or replacement thereof with a non-rigid and/or non-fixed counterpart could adversely affect the structural integrity of the slide-out room.

In some applications, particularly in narrow vehicles, the side walls of the slide-out room can adversely affect mobility within the RV when the slide-out room is retracted.

### BRIEF DESCRIPTION OF THE DRAWINGS

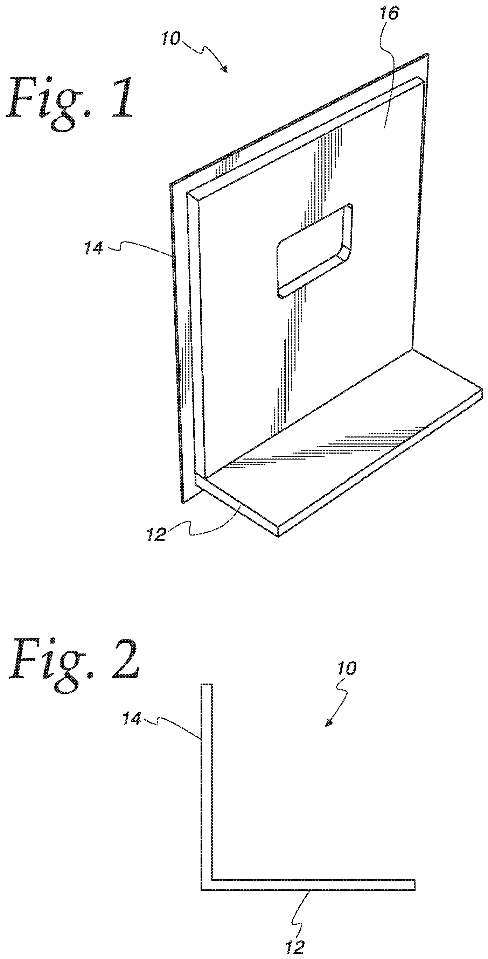

Fig. 1 is a perspective view of an illustrative slide-out room including a floor fixed to and end wall according to the present disclosure;
Fig. 2 is a side elevation view of the slide-out room of Fig. 1;

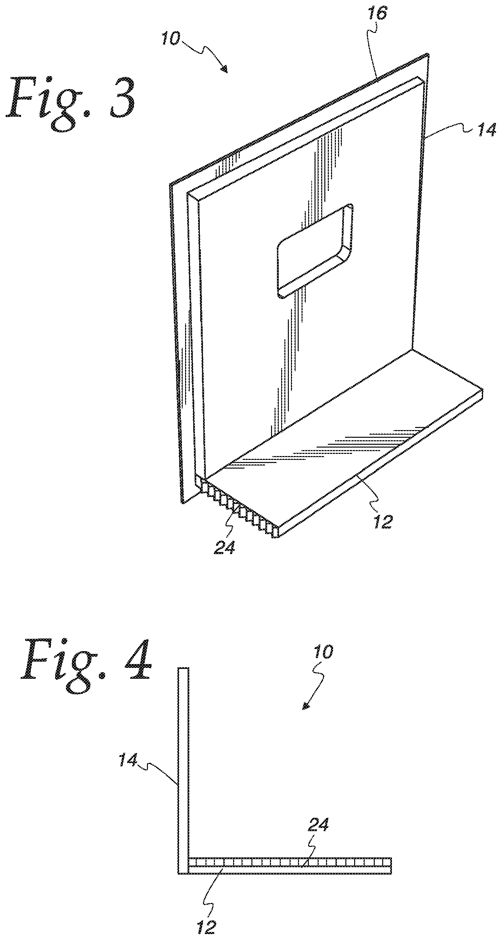

Fig. 3 is a perspective view of the slide-out room of Fig. 1 with a first drive rack or driven member attached to a first side edge of the floor thereof;
Fig. 4 is a side elevation view of the slide-out room of Fig. 3;

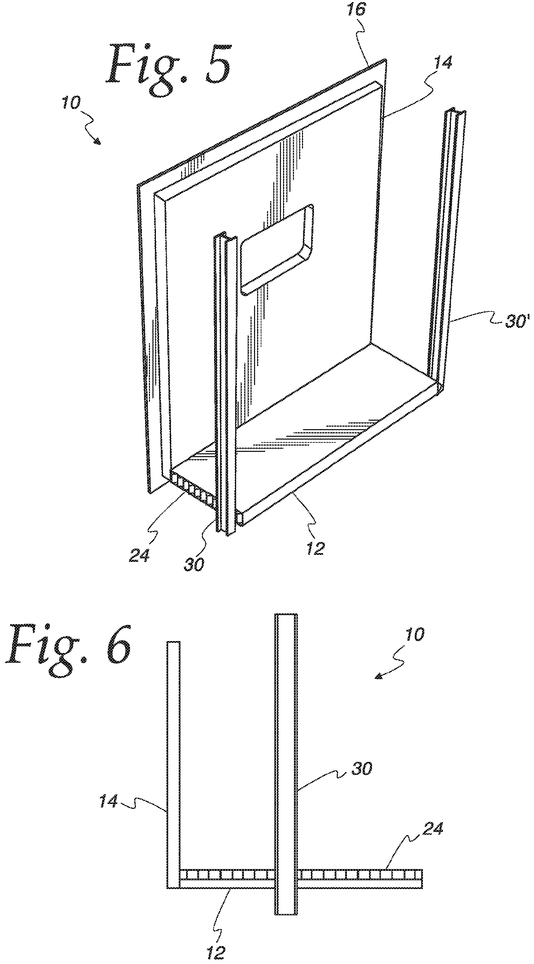

Fig. 5 is a perspective view of the slide-out room of Fig. 3 in combination with a first drive member engaged with the first driven member and a second drive member engaged with a second driven member attached to a second side edge of the floor, with the slide-out room in an extended position;
Fig. 6 is a side elevation view of the slide-out room of Fig. 5;
Fig. 7 is a perspective view of the slide-out room and a first embodiment of the drive members of Fig. 5 wherein each of the first and second drive members includes a first cable guide or pulley proximate a first or lower end thereof and a second cable guide or pulley proximate a second or upper end thereof, with the slide-out room in an extended position;
Fig. 8 is a side elevation view of the slide-out room of Fig. 7;
Fig. 9 is a perspective view of the slide-out room and drive members of Fig. 7 further including a first cable attached to the end wall and the floor proximate first sides and free ends thereof and routed over the upper pulley and under the lower pulley of the first drive member, and a second cable attached to the end wall and the floor proximate second sides and the free ends thereof and routed over the upper pulley and under the lower pulley of the second drive member, with the slide-out room in an extended position;
Fig. 10 is a side elevation view of the slide-out room of Fig. 9, with the slide-out room intermediate the extended position and a retracted position;
Fig. 11 is a perspective view of the slide-out room and drive member of Fig. 9, with the slide-out room intermediate the extended position and a retracted position;
Fig. 12A is an interior perspective view of the slide-out room and the drive members of Fig. 5, with the drive members attached to an opening an a side wall of an RV, and with the slide-out room in an extended position;
Fig. 12B is another interior perspective view of the slide-out room and the drive members of Fig. 5, with the drive members attached to an opening an a side wall of an RV, and with the slide-out room in an extended position;

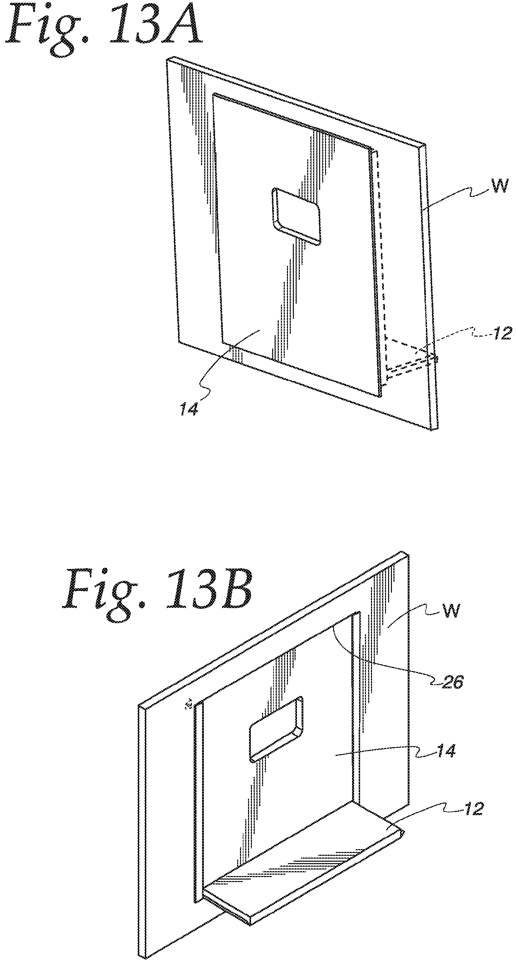

Fig. 13A is an exterior perspective view of the slide-out room and the drive members of Fig. 5, with the drive members attached to an opening an a side wall of an RV, and with the slide-out room in a retracted position;
Fig. 13B is an interior perspective view of the slide-out room and the drive members of Fig. 13A;
Fig. 14A is an exterior perspective view of the slide-out room and the drive members of Fig. 5, with the drive members attached to an opening in a side wall of an RV, and with the slide-out room in an intermediate position;
Fig. 14B is an interior perspective view of the slide-out room and the drive members of Fig. 14A;
Fig. 15A is an exterior perspective view of the slide-out room and the drive members of Fig. 5, with the drive members attached to an opening an a side wall of an RV, and with the slide-out room in an extended position;
Fig. 15B is an interior perspective view of the slide-out room and the drive members of Fig. 15A;
Fig. 16 is a perspective view of the slide-out room and a second embodiment of the drive member of Fig. 5 wherein each of the first and second drive members includes a spool or take-up roller proximate a second or upper end thereof, and further including a first cable attached to the end wall proximate a first side and free end thereof and to the spool of the first drive member, and a second cable attached to the end wall proximate a second side and free end thereof and to the spool of the second drive member, with the slide-out room in an extended position;
Fig. 17 is an end elevation view of the slide-out room and drive members of Fig. 13, with the slide-out room intermediate the extended position and a retracted position;
Fig. 18 is a detail perspective view of a portion of the slide-out room, first drive member, and first cable of Fig. 13;
Fig. 19 is another detail perspective view of the portion of the slide-out room, first drive member, and first cable of Fig. 13;
Fig. 20 is a further detail perspective view of the portion of the slide-out room, first drive member, and first cable of Fig. 13;
Fig. 21 is a perspective view of the slide-out room and drive member of Fig. 13, with the slide-out room intermediate the extended position and a retracted position;
Fig. 22 is a perspective view of an operating mechanism for a slide-out room according to the present disclosure; and
Fig. 23 is a cross-sectional end view of a portion of the operating mechanism of Fig. 20.

### DETAILED DESCRIPTION OF THE DRAWINGS

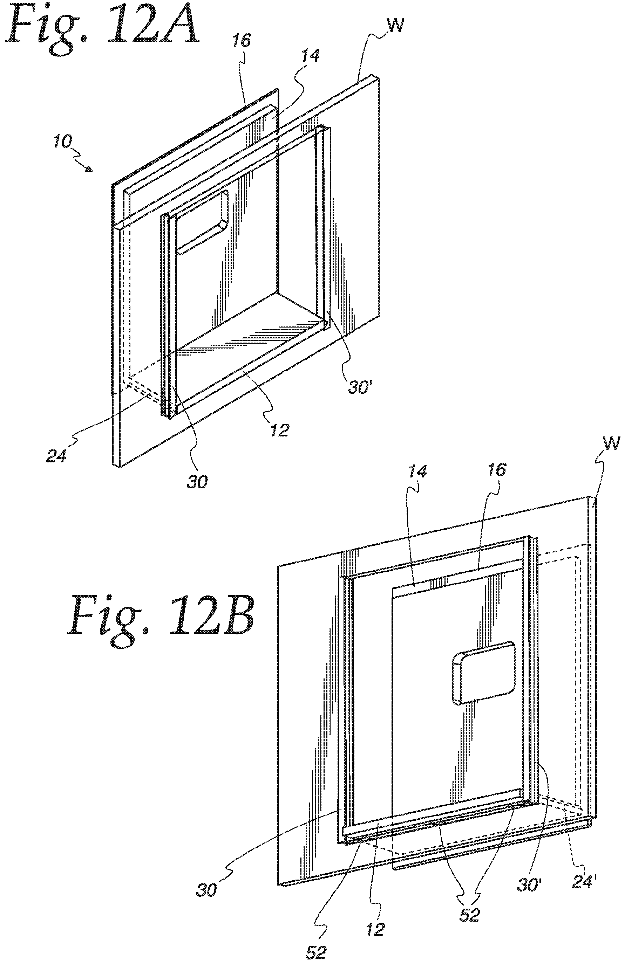

The drawings show illustrative embodiments of a slide-out room or compartment 10. As best shown in Figs. 12A and 12B, the slide-out room 10 is received in an opening defined by a wall W of a structure, for example an RV. One or more operating mechanisms are connected between the slide-out room 10 and the wall W of the RV and operable to extend and retract (or reciprocate) the slide-out room through the opening.

The slide-out room 10 includes a floor 12 and an end or outer wall 14 connected to each other. Typically, the floor 12 and the end wall 14 would be rigid, and the two would be rigidly connected to each other. In an embodiment, the floor 12 and the end wall 14 may be attached to an underlying framework (not shown) supporting the floor and the end wall. The framework may include, for example, a rigid floor support portion rigidly connected to a rigid end wall support portion. An outwardly-extending flange 16 may be provided about the periphery of the end wall 14. The flange 16 may engage a corresponding portion of the side wall W when the slide-out room 10 is retracted, either directly or through an intervening seal or other member (not shown).

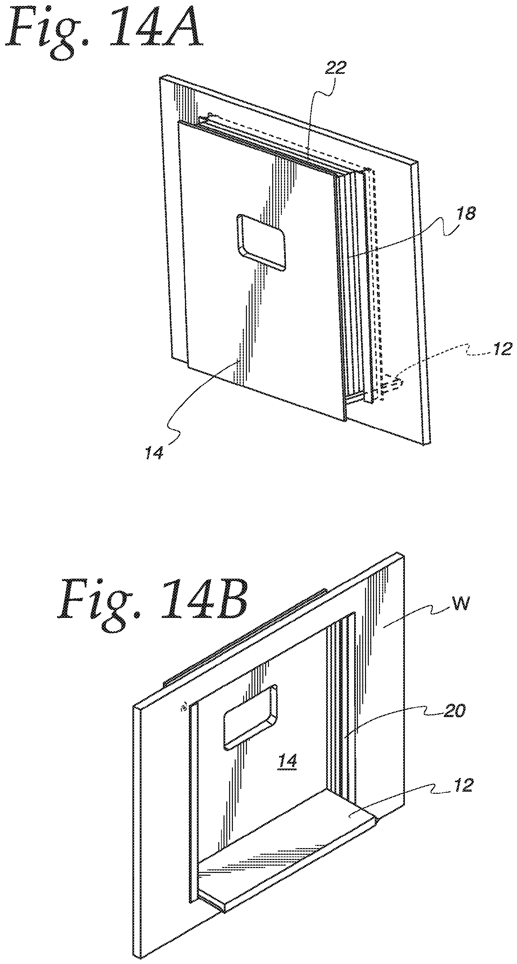

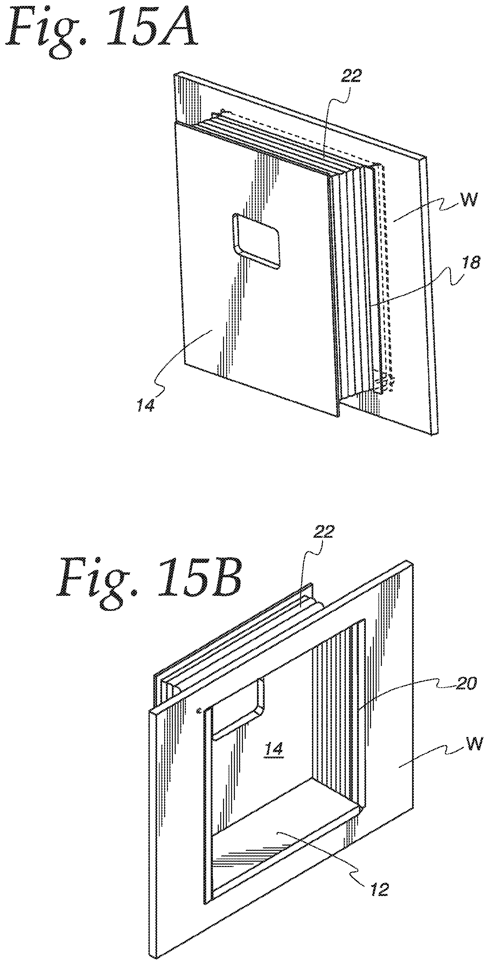

As best shown in Figs. 14A - 15B, the slide-out room 10 may also include one or more of a first sidewall 18, a second sidewall 20, and a ceiling (or roof) 22 connected or connectable to one or more of the rigid wall 14, the floor 12, and the wall W. One or more of the first sidewall 18, the second sidewall 20, and the ceiling 22 is collapsible. In an embodiment, such a collapsible sidewall or ceiling may be made of a flexible material, for example, a flexible plastic or other polymeric material, canvas or another fabric.

As shown, the first sidewall 18, the second sidewall 20, and the ceiling 22 are embodied as an accordion-pleated fabric structure having a first end connected to the wall W or other portion of the structure and a second end connected to the end wall 14 or other portion of the slide-out room 12. The foregoing accordion-pleated fabric structure extends to form the first sidewall 18, the second sidewall 20, and the ceiling 22 when the slide-out room 10 is extended, and compresses into a narrow stack 26 when the slide-out room is retracted. The stack 26 may be disposed between the wall W of the RV and the end wall 14 of the slide-out room 10 or at least partially within the opening defined by the wall of the RV.

In other embodiments, one or more of the first sidewall 18, the second sidewall 20, and the ceiling 22 could be foldable, rollable, or nestable panels or other materials, or they could be pleated in other ways. In an embodiment, one or more, but not all, of the first sidewall 18, the second sidewall 20, and the ceiling 22 could be removable from the slide-out room 10 and the RV or other structure. In an embodiment, one or more, but not all, of the first sidewall 18, the second sidewall 20, and the ceiling 22 could be rigid and fixed.

The illustrated embodiments include a first operating mechanism connected between the slide-out room 10 and a first jamb of the opening in the wall W of the RV. The illustrated embodiments also include a second operating mechanism connected between the slide-out room 10 and a second jamb of the opening in the wall W of the RV. The first and second operating mechanisms may be identical to or mirror images of each other. (Portions of the second operating mechanism corresponding to portions of the first operating mechanism may be referred to or identified herein and in the drawings using primed reference signs.) As such, only the first operating mechanism will be discussed in detail.

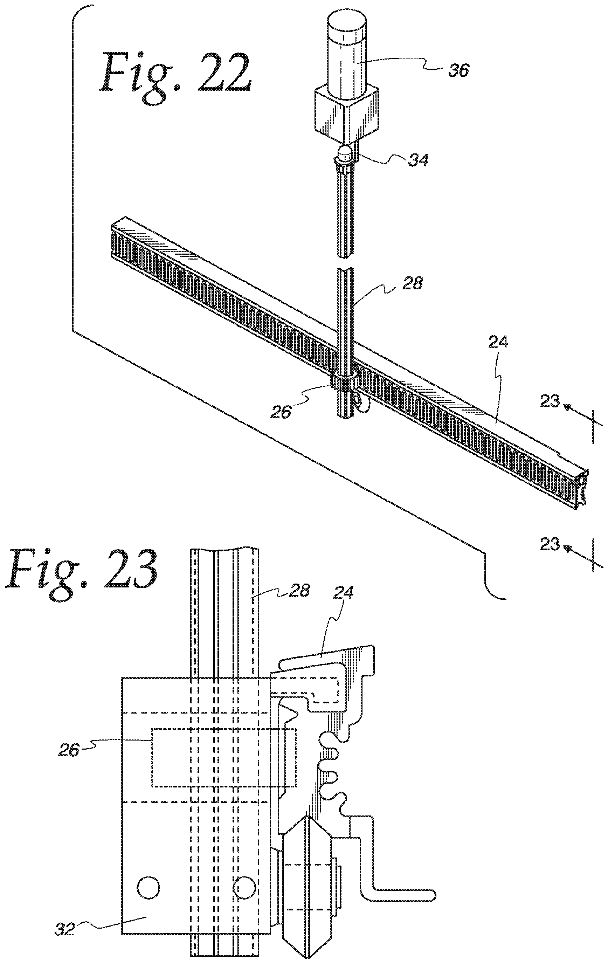

As illustrated, the first operating mechanism includes a driven portion attached to the slide-out room 10 and a drive portion attached to the wall W of the RV. As shown, the driven portion includes a gear rack 24 attached to a first side edge of the floor 12. As best shown in Figs. 22 and 23, the drive portion includes a pinion gear 26 engaged with the gear rack. The pinion gear 26 is keyed to or otherwise disposed on a torque shaft 28 for rotation therewith. With reference to, for example, Figs. 12A and 12B, the torque shaft 28 is disposed on or in an elongated column or housing 30 attached to a first jamb of the opening in the wall W of the RV. The torque shaft 28 may be carried by a first (or lower) bearing block 32 and a second (or upper) bearing block 34 in rotating engagement therewith. A driver 36, for example, a hand-operated crank or a bi-directional motor, may be engaged with the torque shaft 28 to selectively rotate the torque shaft in first and second directions of rotation.

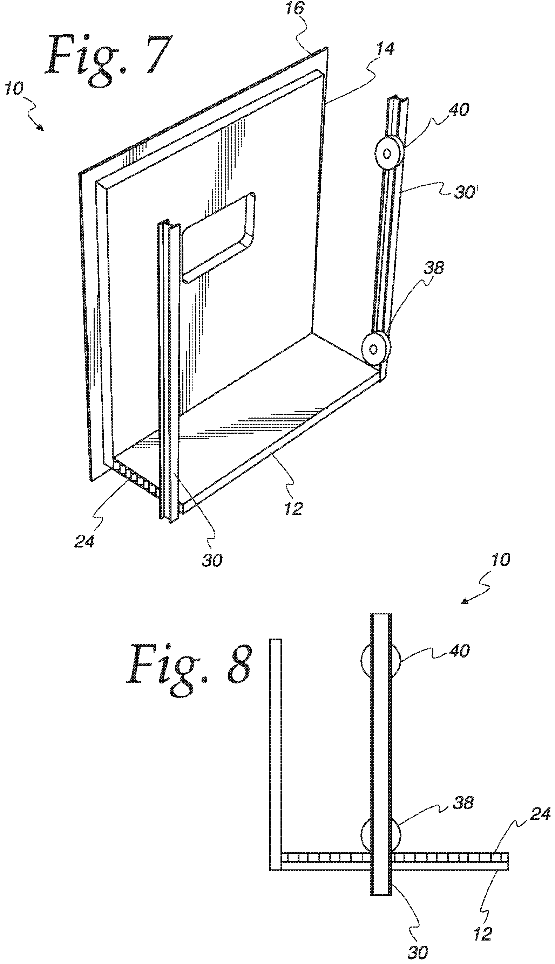

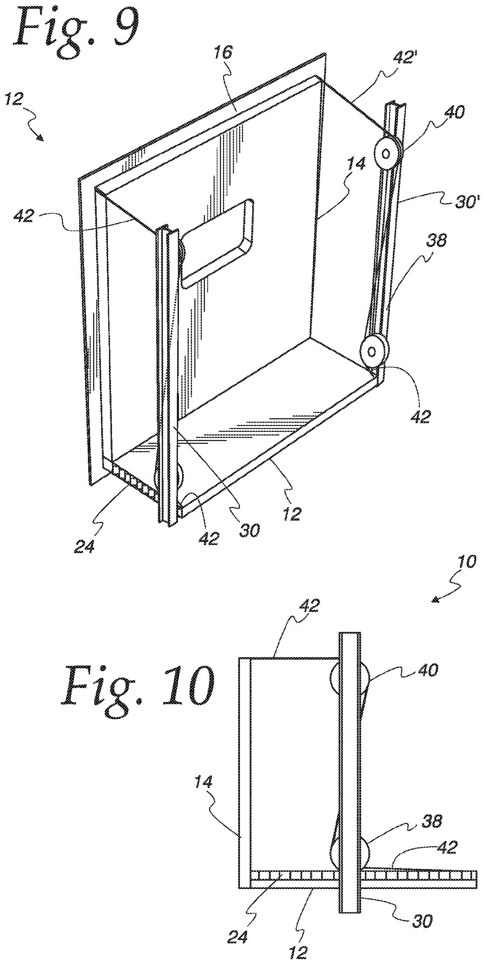

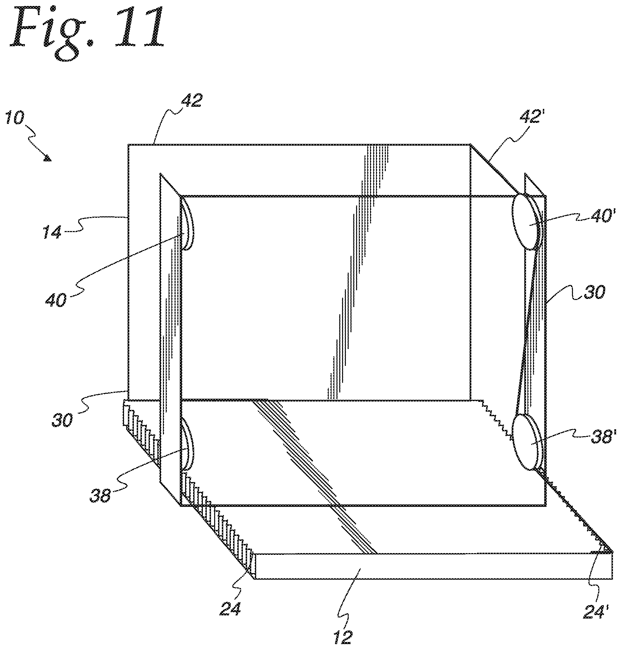

In a first embodiment, as best shown in shown in Figs. 7-11, the drive portion may further include a first or lower cable guide 38 attached to the column 30 near a first or lower end thereof and a second or upper cable guide 40 attached to the column near a second or upper end thereof. The first and second cable guides 38, 40 may be embodied as fixed guides or as pulleys rotatably mounted to the column 30.

In pulley embodiments, one or both of the first and second pulleys 38, 40 may be passive (or undriven). Alternatively, one or both of the first and second pulleys 38, 40 may be driven. More specifically, the lower pulley 38 may be engaged with the gear rack 24 or the pinion gear 26 or another gear (not shown) driven by the torque shaft 28, such that rotation of the torque shaft or displacement of the gear rack with respect to the column 30 results in rotation of the lower pulley. The upper pulley 40 may be similarly engaged with another gear (not shown) driven by the torque shaft 28.

A cable 42 has a first end that may be connected to the end wall 14 proximate the first side and the free end thereof. The cable 42 has a second end that may be connected to the floor 12 proximate the first side and free end thereof. An intermediate portion of the cable 42 may be routed over the upper cable guide or pulley 40 and under the lower cable guide or pulley 38. The term "cable" as used herein may refer to any form of flexible member capable of tensioning, suspending, or otherwise stabilizing the slide-out room 10 with respect to the RV or other framework in which it may be installed to thereby mitigate a tendency for the slide-out room to tip out of the RV or other framework in which it may be installed. For example, the cable may be embodied as a wire rope, a chain, a polymeric belt or strap.

In use, the motor 36 may be energized to run in a first or extend direction of rotation, thereby causing the pinion gear 26 to rotate in a first direction and to drive the gear rack 24 in a first or outward or extend direction with respect to the wall W of the RV. In embodiments wherein one or both of the first and second cable guides 38, 40 are driven pulleys, the pulley(s) may drive the cable 42 so that the second end of the first cable pulls the free end of the floor 12 toward the lower pulley and the wall W of the RV. In embodiments wherein one or both of the first and second cable guides is a fixed guide or a passive pulley, the cable 42 may simply be directed by the respective guide or pulley. In any event, the cable 42 may serve to maintain the structural relationship between the floor 12 and the end wall 14.

Similarly, the motor 36 may be energized to run in a second or retract direction of rotation to cause the reverse effect. For example, operation of the motor 36 in the second direction causes the pinion gear 26 to rotate in a second direction and thereby drive the gear rack 24 in a second or inward or retract direction with respect to the wall W of the RV. In embodiments wherein one or more of the first and second cable guides 38, 40 are driven pulleys, the pulleys may drive the cable 42 so that the first end of the first cable pulls the end wall 14 toward the upper pulley and the wall W of the RV.

In an embodiment, one or both of the first and second cable guides 38, 40 may be embodied as driven sprockets, and the cable 42 may be embodied as a chain engaged with the sprockets.

In an embodiment, the column 30 may be omitted and one or more of the torque shaft 28, the bearing blocks 32, 34, the driver 36, and the cable guides 38, 40 could be connected to the RV or other structure directly or through another intervening component.

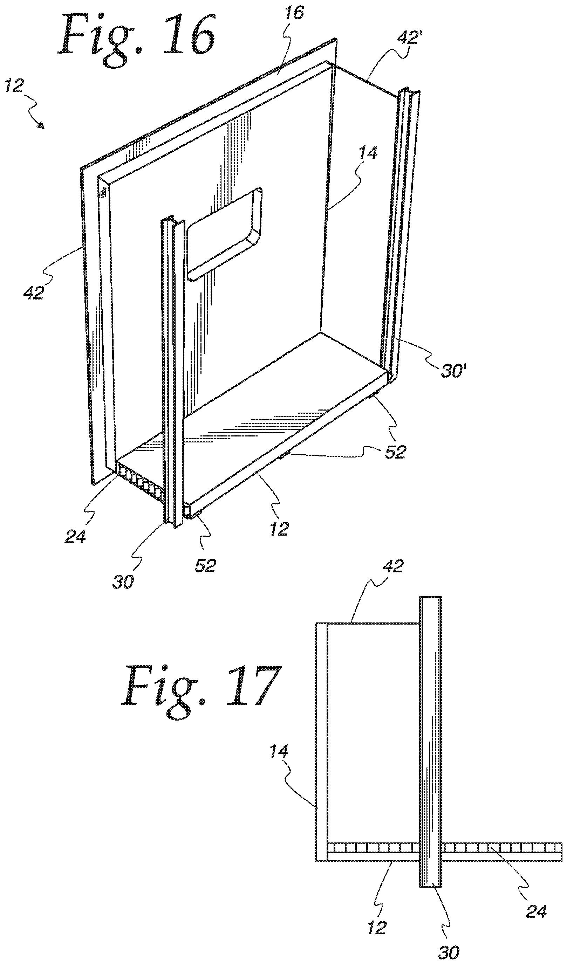

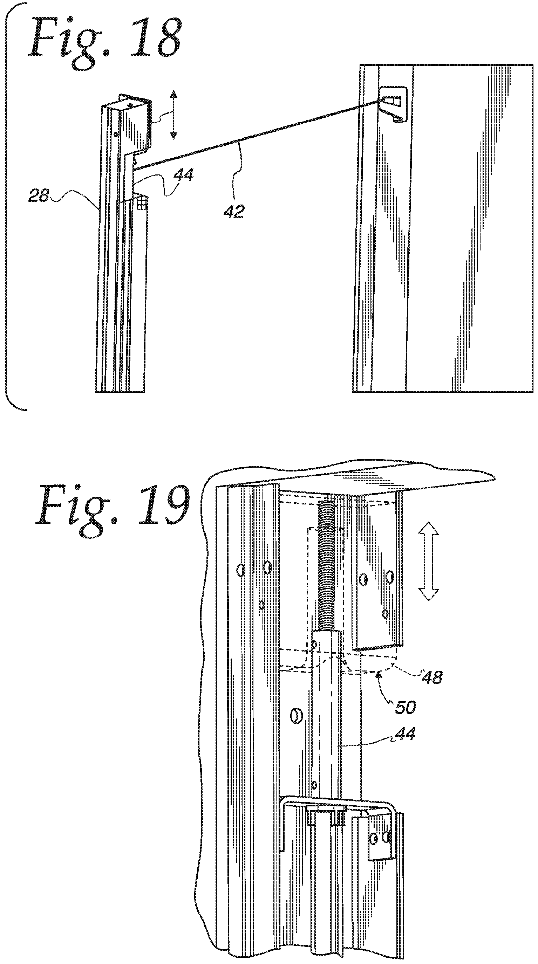

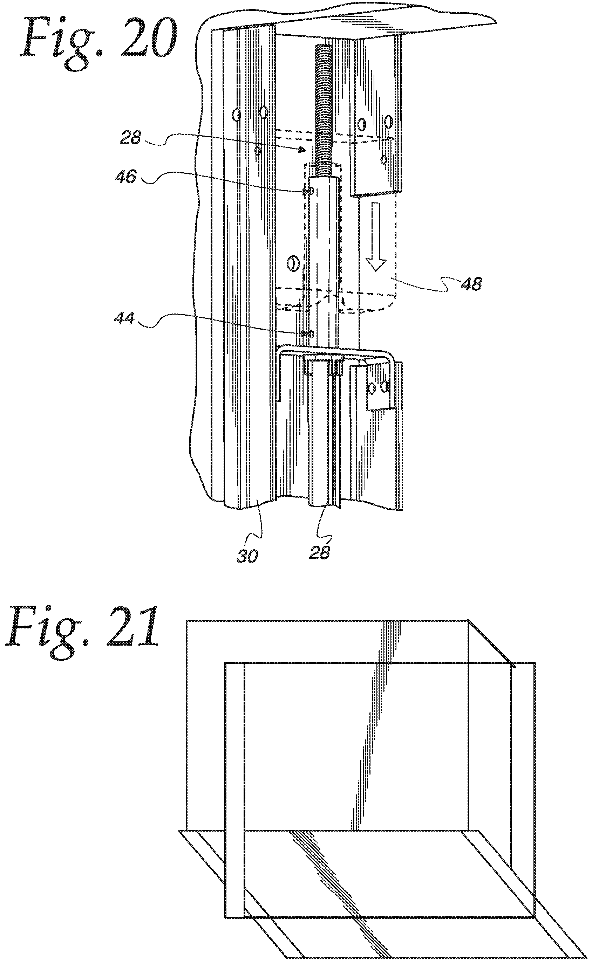

In a second embodiment, as best shown in Figs. 16 - 21, the first end of the cable 42 is connected to the end wall 14 in a manner similar to that of the first embodiment. Rather than being attached to the floor 12, as in the first embodiment, the second end of the cable 42 is connected to a take-up spool 44 disposed on the torque shaft 28 for rotation therewith. The cable 42 is attached to the torque shaft 28 at an anchor point 46. Rotation of the motor 16 in the first or extend direction unwinds the cable 42 from the take-up spool 44, thereby slackening the cable. Rotation of the motor 16 in the second or retract direction winds the cable 42 onto the take-up spool 44, thereby tensioning the cable so that it draws the end wall 14 toward the take-up spool and the wall W of the RV.

The second embodiment may further include a guide block 48 received in and configured to slide axially within the column 30. The guide block 48 may define an aperture therein or extending there through and configured to receive a threaded end of the torque shaft 28 so that rotation of the torque shaft 28 in the first or extend direction causes the guide block 48 to move in a first or extend direction, and so that rotation of the torque shaft 28 in the second or retract direction causes the guide block to move in a second or retract direction. When the guide block 48 moves in the first or extend direction, a guide face 50 of the guide block moves toward the anchor point 46. When the guide block 48 moves in the second or retract direction, the guide face 50 of the guide block moves away from the anchor point 46. As such, when the motor 36 is operated to retract the slide-out room 10, the rotation of the torque shaft 28 causes the cable 42 to be wound onto the take-up spool 44, and the guide face 50 of the guide block 48 directs the cable further and further away from the anchor point 46 so that the cable 42 does not become wound upon itself. That is, the guide face 50 of the guide block 48 directs the cable 42 so that it may be wound onto the take-up spool 44 in a single layer.

In all of the foregoing embodiments, extension of the slide-out room 10 results in expansion of those of the first sidewall 18, the second sidewall 20, and the ceiling 22, that may be collapsible. Similarly, retraction of the slide-out room 10 results in collapsing of those of the first sidewall 18, the second sidewall 20, and the ceiling 22, that may be collapsible.

As best shown in Figs. 12B and 16, the floor 12 may be supported by one or more rollers 52 carried by the RV, for example, by the floor of the RV near the wall of the RV or by a sill of the opening in the wall of the RV.

In alternative embodiments, the driver 36 could be eliminated, back drivable, or disengageable from the operating mechanism(s), and the slide-out room 10 could be reciprocated manually. In such embodiments, a handle could be provided on the slide-out room 10, for example on an inner or outer portion of the slide-out room. A user could grasp the handle and push or pull on it to extend or retract the slide-out room 10. Such manual displacement of the room could back drive the drive portion of the operating mechanisms discussed above.

Latches could be provided to secure the slide-out room 10 in the extended and/or retracted positions.

In an alternative embodiment, the operating mechanism discussed above could be augmented with a drive mechanism including one or more driven portions, for example, gear racks mounted to an underside of the floor 12 of the slide-out room 10, and one or more corresponding drive portions, for example, one or more corresponding pinion gears driven by one or more corresponding torque shafts, engaged with the one or more driven portions. The one or more drive portion could be mounted to the floor of the RV or to a sill of the opening in the wall W. The one or more drive portion could be disposed in one or more respective enclosures similar to the housings 30. Such drive mechanism could retain one or more of the column 30, cable 42, and cable guides 38, 40 as discussed above to stabilize the slide-out room. In pulley embodiments, an intervening drive member, for example, an endless cable, could mechanically couple one of the torque shafts to one or more of the pulleys.

## Claims

1. A system for use in connection with a structure having a wall defining an opening, the system comprising:
a slide-out compartment (10) receivable within the opening, the slide-out compartment comprising a floor (12), an end wall (14) connected to the floor proximate an end edge of the floor, and at least one of (a) a first collapsible side wall (18) connected or connectable to the end wall and connectable to the structure, (b) a second collapsible side wall (20) connected or connectable to the end wall and connectable to the structure, and (c) a collapsible roof (22) connected or connectable to the end wall and connectable to the structure; and
an operating mechanism connected between the structure and the slide-out compartment,
**characterised in that** the operating mechanism comprises:
a first driven portion including a gear rack (24) connected to a first side edge of the floor;
a first drive portion including a pinion gear (26) engaged with the gear rack and connectable to the wall of the structure adjacent the first driven portion, wherein the pinion gear (26) is keyed to or otherwise disposed on a torque shaft (28) for rotation therewith; and
a first cable (42) connected to an upper portion of the end wall of the slide-out compartment, the first cable operably associated with the first drive portion.

2. The system of claim 1, the first drive portion comprising a column (30) connectable to the wall of the structure proximate the opening, the column having a first end relatively near the floor of the slide-out compartment and a second end relatively far from the floor of the slide-out compartment.

3. The system of claim 2, the first cable (42) further connected to an inboard portion of the floor of the slide-out compartment, and the column (30) comprising a first cable guide (38) relatively near the floor of the slide-out compartment and a second cable guide (40) relatively far from the floor of the slide-out compartment, wherein the first cable is engaged or engageable with the first cable guide and the second cable guide.

4. The system of claim 3 wherein at least one of the first cable guide and the second cable guide is a pulley or wherein the first cable is routed under the first cable guide and over the second cable guide.

5. The system of claim 2, the column comprising a torque shaft (28) rotatably connected therein, the pinion gear (26) keyed to the torque shaft and a driver (36) keyed to the torque shaft, the driver configured to rotate the torque shaft with respect to the column (30).

6. The system of claim 4, the column (30) comprising a torque shaft (28) rotatably connected therein, the pinion gear (26) keyed to the torque shaft and a driver (36) keyed to the torque shaft, the driver configured to rotate the torque shaft with respect to the column.

7. The system of claim 6 wherein the pulley (38, 40) is engaged with the gear rack (24) or wherein the pulley is engaged with the pinion gear (26) or another gear driven by the torque shaft (28).

8. The system of claim 1 further comprising a pulley (38, 40) connectable to the structure and engageable with the first cable (42), wherein the pulley is engaged with the gear rack (24) or with the pinion gear (26).

9. The system of claim 1, the operating mechanism further comprising:
a second driven portion (24') connected to a second side edge of the floor;
a second drive portion (26') connectable to the wall of the structure adjacent the second driven portion, the second drive portion engaged with the second driven portion; and
a second cable (42') connected to an upper portion of the end wall of the slide-out compartment, the second cable operably associated with the second drive portion.

10. The system of claim 9, the second cable (42') further connected to an inboard portion of the slide-out compartment, the second drive portion comprising a second column (30') connectable to the wall of the structure proximate the opening, the second column having a first end relatively near the floor of the slide-out compartment and a second end relatively far from the floor of the slide-out compartment, the second column comprising a third cable guide (38') relatively near the floor of the slide-out compartment and a fourth cable guide (40') relatively far from the floor of the slide-out compartment, wherein the second cable is engaged or engageable with the third cable guide and the fourth cable guide.

11. The system of claim 10, the second column (30') comprising a second torque shaft (28') disposed therein, a second pinion gear (26') keyed to the second torque shaft and a second driver (36') keyed to the second torque shaft, the second driver configured to rotate the second torque shaft with respect to the second column, and wherein the second driven portion comprises a second gear rack (24') engaged with the second pinion gear (26').

12. The system of claim 6, the first drive portion further comprising a take-up spool (44) disposed on the torque shaft (28) for rotation therewith, and the cable (42) further connected to the torque shaft, wherein rotation of the torque shaft in a first direction unwinds the first cable from the take-up spool, and rotation of the torque shaft in a second direction winds the first cable onto the take-up spool.

13. The system of claim 12, the first drive portion further comprising a guide block (48) slidably received in the column (30) and in threaded engagement with the torque shaft (28), wherein rotation of the torque shaft in the first direction causes the guide block to slide within the column in a first direction and rotation of the torque shaft in the second direction causes the guide block to slide within the column in a second direction, the guide block configured to guide the first cable onto the torque shaft in a single layer when the torque shaft is rotated in the second direction.

## Patentansprüche

1. System zur Verwendung in Verbindung mit einem Aufbau, der eine eine Öffnung definierende Wand aufweist, wobei das System Folgendes umfasst:
- ein ausziehbares Fach (10), das in der Öffnung aufgenommen werden kann, wobei das herausschiebbare Fach einen Boden (12), eine mit dem Boden in der Nähe einer Endkante des Bodens verbundene Endwand (14) und (a) eine erste zusammenklappbare Seitenwand (18), die mit der Endwand verbunden oder verbindbar ist und mit dem Aufbau verbunden werden kann, (b) eine zweite klappbare Seitenwand (20), die mit der Endwand verbunden oder verbindbar ist und mit dem Aufbau verbunden werden kann und/oder (c) ein klappbares Dach (22), das mit der Endwand verbunden oder verbindbar ist und mit dem Aufbau verbunden werden kann, und
- einen Betätigungsmechanismus, der zwischen dem Aufbau und dem ausziehbaren Fach angeschlossen ist,
**dadurch gekennzeichnet, dass** der Betätigungsmechanismus umfasst:
- einen ersten angetriebenen Abschnitt mit einer Zahnstange (24), die mit einer ersten Seitenkante des Bodens verbunden ist,
- einen ersten Antriebsabschnitt mit einem Ritzel (26), das mit der Zahnstange in Eingriff steht und mit der Wand des Aufbaus angrenzend an den ersten angetriebenen Abschnitt verbindbar ist, wobei das Ritzel (26) mit einer Verdrehwelle (28) formschlüssig oder anderweitig auf dieser angeordnet ist, um sich mit dieser zu drehen, und
- ein erstes mit dem oberen Abschnitt der Endwand des ausziehbaren Fachs verbundenes Seil (42), wobei das erste Seil betriebsfähig mit dem ersten Antriebsabschnitt verbunden ist.

2. System nach Anspruch 1, wobei der erste Antriebsabschnitt eine mit der Wand des Aufbaus in der Nähe der Öffnung verbindbare Säule (30) umfasst, wobei die Säule ein erstes Ende relativ nahe dem Boden des ausziehbaren Fachs und ein zweites Ende relativ weit entfernt vom Boden des ausziehbaren Fachs hat.

3. System nach Anspruch 2, wobei das erste Seil (42) ferner mit einem inneren Bodenabschnitt des ausziehbaren Fachs verbunden ist und die Säule (30) eine erste Seilführung (38) relativ nahe dem Boden des ausziehbaren Fachs und eine zweite Seilführung (40) relativ weit entfernt vom Boden des ausziehbaren Fachs aufweist, wobei das erste Seil mit der ersten Seilführung und der zweiten Seilführung in Eingriff steht oder in Eingriff gebracht werden kann.

4. System nach Anspruch 3, wobei die erste Seilführung und/oder die zweite Seilführung eine Umlenkrolle ist oder wobei das erste Seil unter der ersten Seilführung und über die zweite Seilführung geführt wird.

5. System nach Anspruch 2, wobei die Säule eine drehbar mit ihr verbundene Verdrehwelle (28), das mit der Verdrehwelle formschlüssig verbundene Ritzel (26) und einen mit der Verdrehwelle formschlüssig verbundenen Antrieb (36) umfasst, wobei der Antrieb so eingerichtet ist, dass er die Verdrehwelle in Bezug auf die Säule (30) dreht.

6. System nach Anspruch 4, wobei die Säule (30) eine drehbar darin verbundene Verdrehwelle (28), das mit der Verdrehwelle formschlüssig verbundene Ritzel (26) und einen mit der Verdrehwelle formschlüssig verbundenen Antrieb (36) umfasst, wobei der Antrieb so eingerichtet ist, dass er die Verdrehwelle in Bezug auf die Säule dreht.

7. System nach Anspruch 6, bei dem die Umlenkrolle (38, 40) mit der Zahnstange (24) in Eingriff steht oder bei dem die Umlenkrolle mit dem Ritzel (26) oder einem anderen von der Verdrehwelle (28) angetriebenen Zahnrad in Eingriff steht.

8. System nach Anspruch 1, das ferner eine Umlenkrolle (38, 40) umfasst, die mit dem Aufbau verbunden werden kann und mit dem ersten Seil (42) in Eingriff gebracht werden kann, wobei die Umlenkrolle mit der Zahnstange (24) oder mit dem Ritzel (26) in Eingriff ist.

9. System nach Anspruch 1, wobei der Betätigungsmechanismus ferner umfasst:
- einen zweiten angetriebenen Abschnitt (24'), der mit der zweiten Seitenkante des Bodens verbunden ist,
- einen zweiten Antriebsabschnitt (26'), der mit der Wand der Struktur angrenzend an den zweiten angetriebenen Abschnitt verbindbar ist, wobei der zweite Antriebsabschnitt mit dem zweiten angetriebenen Abschnitt in Eingriff steht, und
- ein zweites Seil (42'), das mit dem oberen Abschnitt der Endwand des ausziehbaren Fachs verbunden ist, wobei das zweite Seil betriebsfähig mit dem zweiten Antriebsabschnitt verbunden ist.

10. System nach Anspruch 9, wobei das zweite Seil (42') ferner mit einem inneren Abschnitt des ausziehbaren Fachs verbunden ist, wobei der zweite Antriebsabschnitt eine zweite Säule (30') umfasst, die mit der Wand des Aufbaus in der Nähe der Öffnung verbunden werden kann, wobei die zweite Säule ein erstes Ende relativ nahe dem Boden des ausziehbaren Fachs und ein zweites Ende relativ weit vom Boden des ausziehbaren Fachs entfernt aufweist, die zweite Säule eine dritte Seilführung (38') in relativer Nähe des Bodens des ausziehbaren Fachs und eine vierte Seilführung (40') in relativer Entfernung vom Boden des ausziehbaren Fachs aufweist, wobei das zweite Seil mit der dritten Seilführung und der vierten Seilführung in Eingriff oder in Eingriff bringbar ist.

11. System nach Anspruch 10, wobei die zweite Säule (30') eine darin angeordnete zweite Verdrehwelle (28'), ein mit der zweiten Verdrehwelle formschlüssig verbundenes zweites Ritzel (26') und einen mit der zweiten Verdrehwelle formschlüssig verbundenen zweiten Antrieb (36') umfasst, wobei der zweite Antrieb so eingerichtet ist, dass er die zweite Verdrehwelle in Bezug auf die zweite Säule dreht, und wobei der zweite angetriebene Abschnitt eine zweite Zahnstange (24') umfasst, die mit dem zweiten Ritzel (26') in Eingriff steht.

12. System nach Anspruch 6, wobei der erste Antriebsabschnitt ferner eine Aufwickelspule (44) umfasst, die auf der Verdrehwelle (28) zur Drehung mit dieser angeordnet ist, und das Seil (42) ferner mit der Verdrehwelle verbunden ist, wobei die Drehung der Verdrehwelle in einer ersten Richtung das erste Seil von der Aufwickelspule abwickelt und die Drehung der Verdrehwelle in der zweiten Richtung das erste Seil auf die Aufwickelspule aufwickelt.

13. System nach Anspruch 12, wobei der erste Antriebsabschnitt ferner einen gleitend in der Säule (30) aufgenommenen Führungsblock (48) umfasst, der in Gewindeeingriff mit der Verdrehwelle (28) steht, wobei eine Drehung der Verdrehwelle in der ersten Richtung bewirkt, dass der Führungsblock innerhalb der Säule in einer ersten Richtung gleitet, und eine Drehung der Verdrehwelle in der zweiten Richtung bewirkt, dass der Führungsblock innerhalb der Säule in der zweiten Richtung gleitet, wobei der Führungsblock so eingerichtet ist, dass er das erste Seil zu einer einzigen Lage auf die Verdrehwelle führt, wenn die Verdrehwelle in der zweiten Richtung gedreht wird.

## Revendications

1. Système utilisé en liaison avec une structure ayant une paroi formant une ouverture, le système comprenant :
- un compartiment extractible par coulissement (10) reçu dans l'ouverture, ce compartiment extractible ayant un plancher (12), une paroi d'extrémité (14) reliée au plancher près du bord d'extrémité du plancher et au moins l'un des éléments suivants :
a. une première paroi pliante (18) reliée ou susceptible d'être reliée à la paroi d'extrémité et d'être reliée à la structure,
b. une seconde paroi latérale pliante (20) reliée ou susceptible d'être reliée à la paroi d'extrémité et reliée à la structure, et
c. un toit pliant (22) relié ou susceptible d'être relié à la paroi d'extrémité et relié à la structure, et
- un mécanisme de manœuvre relié à la structure et au compartiment déployable par coulissement,
système **caractérisé en ce que**
le mécanisme de manœuvre comprend :
- une première partie entraînée, avec une crémaillère (24), reliée au premier bord latéral du plancher,
- une première partie d'entraînement avec un pignon (26) coopérant avec la crémaillère et susceptible d'être reliée à la paroi de la structure adjacente à la première partie entraînée,
* le pignon (26) étant claveté ou fixé d'une autre manière à un arbre de transmission de couple (28) pour tourner avec celui-ci, et
- un premier câble (42) relié à la partie supérieure de la paroi d'extrémité du compartiment déployable par coulissement, le premier câble coopérant avec la première partie d'entraînement.

2. Système selon la revendication 1,
dans lequel
la première partie d'entraînement comprend une colonne (30) susceptible d'être reliée à la paroi de la structure à proximité de l'ouverture, la colonne ayant une première extrémité relativement proche du plancher du compartiment déployable par coulissement et une seconde extrémité relativement éloignée du plancher du compartiment déployable par coulissement.

3. Système selon la revendication 2,
dans lequel
le premier câble (42) est en outre relié à une partie embarquée du plancher du compartiment déployable par coulissement et la colonne (30) comprend un premier guide de câble (38) relativement proche du plancher du compartiment déployable par coulissement et un second guide de câble (40) relativement éloigné du plancher du compartiment déployable par coulissement,
* le premier câble étant engagé ou pouvant être engagé avec le premier guide de câble et le second guide de câble.

4. Système selon la revendication 3,
dans lequel
au moins l'un des éléments, le premier guide de câble et le seconde guide de câble est une poulie, ou
le premier câble passe sous le premier guide de câble et par-dessus le second guide de câble.

5. Système selon la revendication 2,
dans lequel
la colonne comprend un arbre de transmission de couple (28) relié en rotation dans celle-ci, le pignon (26) étant claveté sur l'arbre de transmission de couple et un organe d'entraînement (36) est claveté sur l'arbre de transmission de couple, l'organe d'entraînement étant configuré pour faire tourner l'arbre de transmission de couple par rapport à la colonne (30).

6. Système selon la revendication 4,
**caractérisé en ce que**
la colonne (30) comporte un arbre de transmission de couple (28) reliant en rotation à celle-ci, le pignon (26) étant claveté sur l'arbre de transmission de couple et un organe d'entraînement (36) étant claveté sur l'arbre de transmission de couple, l'organe d'entraînement étant configuré pour faire tourner l'arbre de transmission de couple par rapport à la colonne.

7. Système selon la revendication 6,
dans lequel
la poulie (38, 40) coopère avec la crémaillère (24), ou
la poulie coopère avec le pignon (26) ou autre pignon entraîné par l'arbre de transmission de couple (28).

8. Système selon la revendication 1,
comprenant en outre
une poulie (38, 40) susceptible d'être reliée à la structure et coopérant avec le premier câble (42), la poulie coopérant avec la crémaillère (24) ou avec le pignon (26).

9. Système selon la revendication 1,
dans lequel
le mécanisme de manœuvre comprend en outre :
- une seconde partie entraînée (24') reliée à un second bord latéral du plancher,
- une seconde partie d'entraînement (26') susceptible d'être reliée à la paroi de la structure adjacente à la seconde partie entraînée, cette seconde partie d'entraînement coopérant avec la seconde partie entraînée, et
- un second câble (42') est relié à la partie supérieure de la paroi d'extrémité du compartiment déployable par coulissement, le second câble coopérant avec la seconde partie d'entraînement.

10. Système selon la revendication 9,
dans lequel
le second câble (42') est en outre relié à une partie embarquée du compartiment déployable par coulissement, la seconde partie d'entraînement comprenant une seconde colonne (30') susceptible d'être reliée à la paroi de la structure à proximité de l'ouverture, la seconde colonne ayant une première extrémité relativement proche du plancher du compartiment déployable par coulissement et une seconde extrémité relativement éloignée du plancher du compartiment déployable par coulissement,
la seconde colonne comprenant un troisième guide de câble (38') relativement proche du plancher du compartiment déployable par coulissement et un quatrième guide de câble (40') relativement éloigné du plancher du compartiment déployable par coulissement,
* le second câble étant engagé ou pouvant être engagé dans le troisième guide de câble et le quatrième guide de câble.

11. Système selon la revendication 10,
dans lequel
la seconde colonne (30') comprend un second arbre de transmission de couple (28') disposé dans celle-ci, un second pignon (26') claveté sur le second arbre de transmission de couple et un second organe d'entraînement (36') claveté sur le second arbre de transmission de couple, le second organe d'entraînement étant configuré pour faire tourner le second arbre de transmission de couple par rapport à la seconde colonne, et
- la seconde partie entraînée comprenant une seconde crémaillère (24') coopérant avec le second pignon (26').

12. Système selon la revendication 6,
dans lequel
la première partie d'entraînement comprend en outre une bobine de réception (44) montée sur l'arbre de transmission de couple (28) pour tourner avec celui-ci et le câble (42) étant en outre relié à l'arbre de transmission de couple,
* la rotation de l'arbre de transmission de couple dans une première direction, dévide le premier câble de la bobine réceptrice et la rotation de l'arbre de transmission de couple dans une seconde direction, enroule le premier câble sur la bobine réceptrice.

13. Système selon la revendication 12,
dans lequel
la première partie d'entraînement comprend en outre un bloc de guidage (48) monté coulissant dans la colonne (30) et une liaison filetée avec l'arbre de transmission de couple (28),
* la rotation de l'arbre de transmission de couple dans la première direction faisant glisser le bloc de guidage dans la colonne dans une première direction et la rotation de l'arbre de transmission de couple dans la seconde direction faisant glisser le bloc de guidage dans la colonne dans une seconde direction, le bloc de guidage étant configuré pour guider le premier câble sur l'arbre de transmission de couple dans une nappe simple lorsque l'arbre de transmission de couple tourne dans la seconde direction.
